# FASCICULE DE BREVET EUROPEEN

(11) **EP 1 353 247 B1**
(45) Date de publication et mention de la délivrance du brevet: **10.09.2008**
(21) Numéro de dépôt: 03100943.4
(22) Date de dépôt: 08.04.2003
(51) Int. Cl.: G05B 9/03

(54) **Système et procédé de contrôle de plusieurs actionneurs**
System und Verfahren zur Steuerung von mehreren Betätigungsanordnungen
System and method for controlling a plurality of actuators

(30) Priorité: 10.04.2002 FR 0204465
(43) Date de publication de la demande: 15.10.2003
(73) Titulaire: AIRBUS France, 31060 Toulouse (FR)
(72) Inventeur: Foch, Etienne, 31000 TOULOSUE (FR); Fleury, Christophe, 31340 VACQUIERS (FR)
(74) Mandataire: Poulin, Gérard

(56) Documents cités:
- EP-A- 0 229 559
- EP-A- 0 754 991
- EP-A- 0 987 612
- WO-A-87/07967
- DE-A- 3 726 489
- DE-A- 4 416 795
- DE-A- 19 829 126
- US-A- 5 491 625

## Description

### DOMAINE TECHNIQUE

La présente invention concerne un système et un procédé de contrôle de plusieurs actionneurs, notamment dans le cas où au moins un paramètre lié à au moins un premier actionneur doit être pris en compte avant de commander le changement d'état d'au moins un second actionneur.

Le système et le procédé de l'invention sont utilisables notamment dans le domaine aéronautique.

### ETAT DE LA TECHNIQUE ANTERIEURE

Dans le domaine aéronautique, notamment dans le cas d'un dispositif de génération électrique d'aéronef, Il existe plusieurs solutions connues pour piloter les contacteurs : une solution consiste à utiliser une logique à relais. Une variante plus perfectionnée de cette solution consiste à utiliser un circuit logique programmable intégrant l'ensemble des fonctions logiques nécessaires, permettant, notamment, de tenir compte de contraintes liées à l'état de certains contacteurs.

Mais cette solution présente de nombreux inconvénients :
- cette solution, lorsqu'elle met en oeuvre une logique de commande des actionneurs, nécessite, pour l'amélioration de la sûreté de fonctionnement, une redondance des commandes de ces actionneurs qui est compliquée à réaliser et donc difficilement envisageable ;
- une telle solution n'est pas évolutive : lorsque l'on souhaite ajouter un nouvel actionneur, il convient, dans le cas de l'utilisation d'une logique à relais, d'ajouter des relais et d'effectuer les modifications de câblage en conséquence, ou, dans le cas de l'utilisation d'un circuit logique programmable, de remplacer le dispositif de commande par un autre dispositif de commande comportant les entrées et les sorties nécessaires à la commande de ce nouvel actionneur;
- cette solution, dans certains cas par exemple en cas de maintenance, ne permet pas une mesure et une transmission d'informations relatives au fonctionnement des actionneurs considérés, par exemple des informations relatives aux tensions, courants, températures, ... Il est donc nécessaire d'en disposer par ailleurs. Pour mesurer et transmettre de telles informations, on pourrait utiliser des capteurs appropriés aux grandeurs à mesurer et un bus de communications. Mais la mise en oeuvre de tels moyens additionnels peut être rédhibitoire lorsque des critères d'encombrement et de poids doivent être respectés, par exemple dans le domaine aéronautique. D'autant plus que, dans ce domaine, les bus fréquemment utilisés, par exemple le bus ARINC 429, peuvent nécessiter un nombre important de liaisons physiques, notamment lorsque lesdites informations doivent être transmises à plusieurs calculateurs dans le cas d'un système redondant.

L'invention a pour objectif de pallier ces inconvénients en proposant un système et un procédé de contrôle de ces actionneurs, ce système étant structuré de façon redondante afin de présenter un niveau élevé de sûreté de fonctionnement, et contrôlé par plusieurs calculateurs.

Un document de l'art connu, US 5 491 625, concerne un système d'affichage d'informations et de diagnostic pour véhiculer des informations à un opérateur concernant l'état d'un processus informatisé à contrôler, par exemple un processus de fabrication chimique, à l'aide de dispositifs électriques tel que des capteurs, des contrôleurs, des vannes disposés tout au long de ce processus. US 5,491,625 concerne un système informatique d'affichage de contrôle de processus pour transmettre des informations à un opérateur concernant l'état d'un processus au moyen d'ordinateurs de zone reliés à des capteurs d'entrée sous le contrôle d'ordinateurs de contrôle de processus, chacun de ces ordinateurs étant activement redondant c'est-à-dire répondant de manière active aux mêmes capteurs et pilotant de manière active les mêmes sorties. Les décisions prises par un ordinateur de contrôle de processus déterminent, en effet, les valeurs des signaux de sortie qui sont dirigées vers des dispositifs de sortie spécifiques, par exemple une pompe, par l'ordinateur de zone approprié. Chaque ordinateur de contrôle de processus est relié à tous les ordinateurs de zone au travers de circuits de jonction.

### EXPOSÉ DE L'INVENTION

La présente invention concerne un système de contrôle d'un ensemble d'actionneurs d'un système aéronautique pour effectuer le pilotage de celui-ci, comprenant au moins deux calculateurs et au moins deux modules de contrôle de plusieurs actionneurs chaque module de contrôle étant relié à au moins deux calculateurs de manière à fournir à ceux-ci des informations sur les actionneurs auxquels il est lié, chaque calculateur, relié à au moins deux modules de contrôle, comprenant des moyens de calcul de consignes et d'envoi de celles-ci à ces au moins deux modules de contrôle qui lui sont reliés,
caractérisé en ce que chaque module de contrôle est relié à chacun de ces plusieurs actionneurs par deux liaisons :
- une première liaison pour recevoir des informations concernant cet actionneur,
- une seconde liaison pour piloter l'état de cet actionneur,
en ce qu'une liaison entre un module de contrôle et un calculateur est réalisée au moyen d'un premier bus de communication, en ce que les calculateurs travaillent de façon indépendante.

Avantageusement, les calculateurs sont reliés entre eux par au moins un second bus de communication.

La présente invention concerne également un procédé de contrôle d'un ensemble d'actionneurs d'un système aéronautique pour effectuer le pilotage de celui-ci comprenant au moins deux calculateurs travaillant de façon indépendante et synchrone et au moins deux modules de contrôle de plusieurs actionneurs, chaque module de contrôle étant connecté à chaque actionneur auquel il est relié par une première et une seconde liaisons respectivement pour recevoir des informations concernant cet actionneur et pour piloter l'état de cet actionneur, caractérisé en ce qu'il comprend les étapes suivantes :
- une étape de fourniture d'informations par chaque module de contrôle concernant le(s) actionneur(s) auquel il est lié à au moins deux calculateurs,
- une étape de calcul de consignes et d'envoi de ces consignes par chaque calculateur à au moins deux modules de contrôle.

Dans un premier exemple de réalisation avantageux, le système de l'invention est utilisé pour effectuer le pilotage du système de génération électrique d'un aéronef.

Dans un second exemple de réalisation avantageux, le système de l'invention est utilisé pour effectuer le pilotage des volets d'un aéronef.

Le système de l'invention permet de résoudre de nombreux problèmes existant dans les systèmes de l'art connu, en présentant les avantages suivants :
- Il a un haut niveau de sûreté de fonctionnement et de robustesse du fait de la redondance des calculateurs ainsi que des liaisons entre ces calculateurs et les modules de contrôle des actionneurs et du fait que, dans le mode préféré de réalisation de l'invention, chaque calculateur met ses informations à la disposition des autres calculateurs.
- Il permet, à la fois, de piloter des actionneurs et de récupérer des informations liées à ces derniers (état, mesures, etc...). De façon avantageuse, ces informations peuvent ainsi être exploitées pour la maintenance.
- Il présente une grande souplesse d'évolution : lorsqu'un nouvel actionneur doit être commandé, il suffit d'ajouter un module de contrôle de cet actionneur, de relier ce module de contrôle aux calculateurs appropriés au moyen des bus de communication et d'adapter la programmation desdits calculateurs afin qu'ils prennent en charge la commande de cet actionneur.

Le système de l'invention peut également être utilisé chaque fois qu'une pluralité d'actionneurs doivent être pilotés par un système intelligent et qu'il est nécessaire d'avoir une sûreté de fonctionnement et une disponibilité élevées, par exemple : automobile, machines-outils, etc.

### BRÈVE DESCRIPTION DES DESSINS

La figure 1 illustre un mode de réalisation du système de contrôle de l'invention.

Les figures 2 et 3 illustrent un exemple de réalisation du système de l'invention.

### EXPOSÉ DÉTAILLÉ DE MODES DE RÉALISATION PARTICULIERS

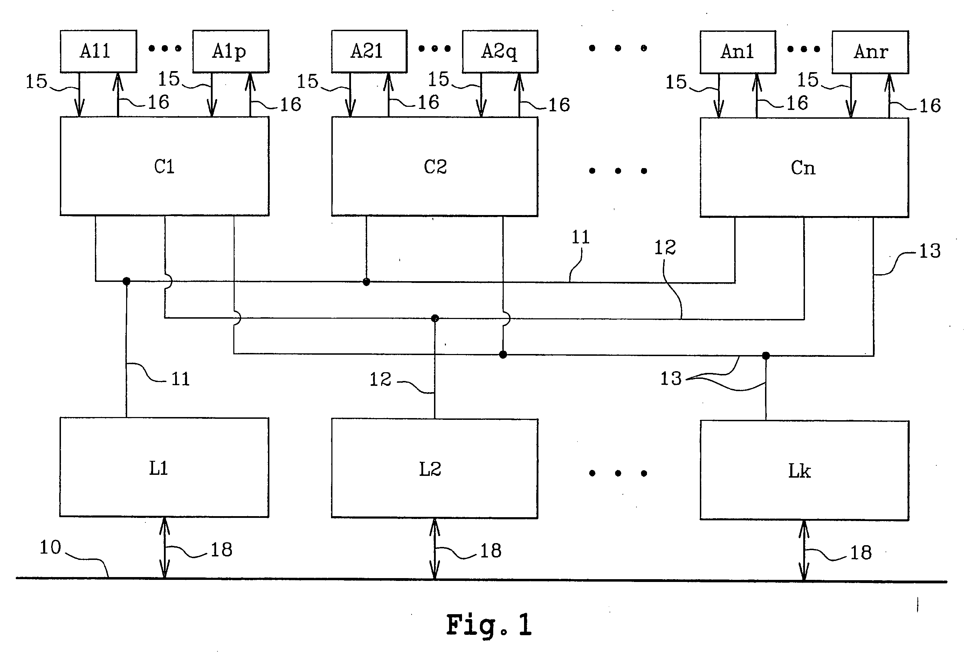

Comme illustré sur la figure 1, le système de l'invention comprend au moins deux modules de contrôle C1, C2, ..., Cn d'au moins un actionneur A11, ..., A1p ; A21, ..., A2q, ..., An1, ..., Anr et au moins deux calculateurs L1, ... Lk. Chaque calculateur est relié à au moins un des modules de contrôle par un premier bus de communication 11, 12 ou 13. Ces calculateurs L1, L2, ..., Lk peuvent, avantageusement, être reliés entre eux par au moins un second bus de communication 10.

Chaque module de communication Ci (1 ≤ i ≤n) est chargé de contrôler au moins un actionneur en pilotant l'état dudit actionneur au moyen d'au moins une première liaison 16. Ledit module de contrôle peut recevoir des informations dudit actionneur, ou d'au moins un capteur associé à ce dernier, au moyen d'au moins une seconde liaison 15. Ce peut être par exemple des informations concernant l'état du contacteur (contact sec), la mesure de tension aux bornes dudit contacteur, la mesure de courant traversant celui-ci, la température, ...

Chaque module de contrôle Ci comporte au moins une unité de traitement d'informations, par exemple un calculateur ou un microcontrôleur, apte à piloter le (ou les) actionneur(s) correspondant(s) au moyen de la (ou des) première(s) liaison(s) 15 en fonction de consignes reçues d'au moins un calculateur L1, ..., Lk et, d'autre part, à fournir à au moins un calculateur, au moyen d'un bus de communication 11, 12, ou 13, des informations sur ce (ou ces) actionneur(s) correspondant(s) reçues au moyen de la (ou des) seconde(s) liaison(s) 16.

L'unité de traitement de chaque module de contrôle décide des actions de pilotage du (ou des) actionneur (s) correspondant (s) en fonction notamment des informations reçues des calculateurs en tenant compte de la cohérence de ces informations, de l'absence ou non de dialogue, de l'existence d'erreurs de communication avec un ou plusieurs calculateurs.

Les modules de contrôle Ci ne sont pas nécessairement reliés à tous les calculateurs. Ainsi, sur la figure le module de contrôle C2 n'est pas relié au calculateur L2. Le nombre de calculateurs L1, L2 ... Lk, auxquels est relié un module de contrôle, est généralement choisi en fonction du niveau de sûreté de fonctionnement souhaité pour ce module de contrôle : plus ce nombre est grand plus ce niveau de sûreté est élevé. Il est, ainsi, possible de relier un ou plusieurs modules de contrôle, pilotant des actionneurs dont l'état n'est pas critique pour l'ensemble du système, à un seul calculateur.

Le fait que chaque module de contrôle soit relié à plusieurs calculateurs par des bus de communication 11, 12, 13 permet d'obtenir un fort niveau de sûreté de fonctionnement du système de l'invention, du fait de la redondance d'une part des calculateurs auquel est relié le module de contrôle et d'autre part des liaisons assurées par ces bus 11, 12, 13.

Avantageusement, les calculateurs L1, L2, ..., Lk travaillent de façon indépendante et asynchrone. Chacun d'eux dispose d'informations provenant des modules de contrôle auxquels il est relié par l'un des bus 11, 12, ou 13. En fonction de l'ensemble des informations dont il dispose, il calcule des consignes qu'il envoie à ces différents modules de contrôle.

Contrairement à certains systèmes connus, le système de l'invention ne dispose pas d'une entité de surveillance des calculateurs pour décider, à un instant donné, de valider un ou plusieurs calculateurs.

Contrairement aux systèmes de l'art connu, les décisions afférentes au pilotage des actionneurs sont prises par l'unité de traitement de chaque module de contrôle en fonction des informations reçues par celui-ci en provenance des différents calculateurs. Lesdites décisions peuvent, par exemple, être prises par un système de vote intégré dans ladite unité de traitement. Une telle caractéristique est très avantageuse car, en déportant ainsi la décision en fin de chaîne de traitement de l'information, on bénéficie d'une grande modularité du système, et on assure la sûreté de fonctionnement tant en ce qui concerne la défaillance éventuelle d'un calculateur qu'en ce qui concerne la défaillance d'une ou plusieurs liaisons entre calculateurs et modules de contrôle.

Dans le mode de réalisation préféré de l'invention, tel qu'illustré sur la figure, chacun des calculateurs L1, L2 ..., Lk est relié au bus de communication 10 au moyen d'une liaison 18. Au moyen de ce bus, chaque calculateur met les informations, qu'il a recueillies auprès des modules de contrôle auxquels il est relié par l'un des bus 11, 12 ou 13 à la disposition des autres calculateurs.

Un tel mode de fonctionnement présente de nombreux avantages, et notamment :
- un calculateur peut disposer des informations provenant de l'ensemble des actionneurs, même si des liaisons entre ce calculateur et des modules de contrôle d'actionneurs sont interrompues. Ce calculateur peut ainsi continuer à calculer les consignes correspondant aux différents actionneurs et à envoyer sur son bus de communication 11, 12, ou 13 les consignes afférentes aux actionneurs pilotés par des modules de contrôle dont la liaison avec ledit calculateur n'est pas interrompue ;
- l'indépendance des différents calculateurs L1, L2, ..., Lk permet d'éviter tout risque de défaillance due à un défaut de synchronisation entre lesdits calculateurs.

Dans un mode de réalisation avantageux, les bus 11, 12 et 13 peuvent être, par exemple, des bus communication de type CAN ("Control Area Network") ou similaire.

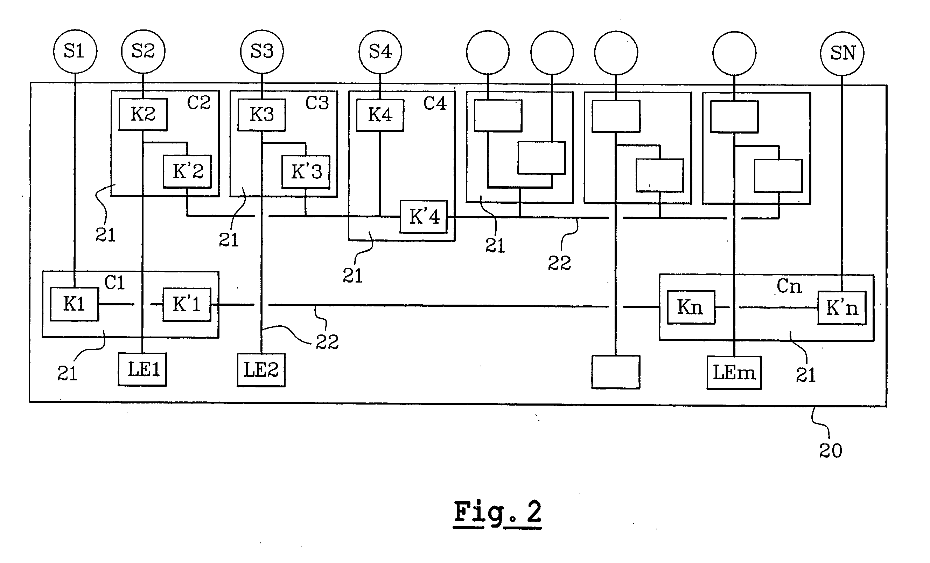

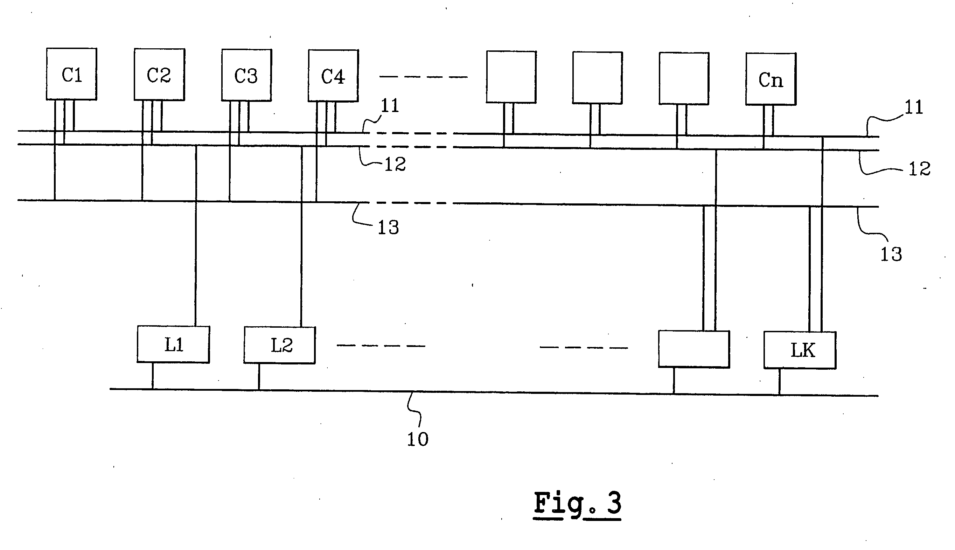

Les figures 2 et 3 illustrent un exemple de réalisation du système de l'invention. La figure 2 représente la distribution de la puissance électrique utilisant des circuits de deux contacteurs, et la figure 3 représente la connexion desdits circuits aux calculateurs de commande au moyen de réseaux de communication (en utilisant par exemple des bus CAN).

Plus précisément, la figure 2 illustre la communication primaire AC d'un démonstrateur, réalisée dans un "coeur électrique" 20 avec des sources/générateurs électriques S1 à Sn, des circuits AC primaires 21 de deux contacteurs (K1, K'1) à (Kn, K'n) comprenant les commandes de ces contacteurs référencées C1 ... Cn, et des lignes de distribution électriques LE1 à LEm, avec par exemple m=4, les lignes de courant étant référencées 22.

La figure 3 illustre le contrôle/communication de la distribution primaire AC, avec les modules de contrôle C1 ... Cn, illustrés sur les figures 1 et 2, reliés chacun à des réseaux de communication 11, 12, 13, comme sur la figure 1, auxquels sont reliés des calculateurs L1, L2... Lk reliés entre eux par un réseau inter-calculateur 10.

On va considérer, à présent, deux exemples de réalisation avantageux concernant le domaine aéronautique.

Dans un premier exemple, le système de l'invention est utilisé pour effectuer le pilotage du système de génération électrique d'un aéronef. Dans ce cas les actionneurs peuvent être des contacteurs électriques. Les informations acquises par les modules de contrôle correspondent alors à l'état desdits contacteurs, à des mesures de tensions, de courants, etc... Le système de l'invention est particulièrement bien adapté à une telle application car certains contacteurs doivent être pilotés en tenant compte de l'état des autres contacteurs, tout en respectant l'enchaînement séquentiel de différents états desdits contacteurs.

Dans un second exemple, le système de l'invention est utilisé pour effectuer le pilotage de volets d'un aéronef, qui sont généralement actionnés par un ensemble de vérins. Les différents vérins actionnant un même volet doivent être pilotés de façon cohérente entre eux. De plus, les positions respectives des différents volets doivent être commandées de façon synchronisée afin de respecter des conditions relatives à l'aérodynamique dudit aéronef. Dans cet exemple, les actionneurs sont donc, notamment, lesdits vérins, certaines des mesures d'informations correspondant alors à la position de ceux-ci. Le système de l'invention s'avère particulièrement bien adapté à la commande de tels volets.

## Revendications

1. Système de contrôle d'un ensemble d'actionneurs (A11, ..., Anr) d'un système aéronautique pour effectuer le pilotage de celui-ci, comprenant au moins deux calculateurs (L1, L2, ..., Lk) et au moins deux modules de contrôle (C1, C2, ..., Cn) de plusieurs actionneurs chaque module de contrôle étant relié à au moins deux calculateurs de manière à fournir à ceux-ci des informations sur les actionneurs auxquels il est lié, chaque calculateur, relié à au moins deux modules de contrôle, comprenant des moyens de calcul de consignes et d'envoi de celles-ci à ces au moins deux modules de contrôle qui lui sont reliés,
**caractérisé en ce que** chaque module de contrôle (C1, C2,...Cn) est relié à chacun de ces plusieurs actionneurs (A11, ...Anr) par deux liaisons :
- une première liaison (15) pour recevoir des informations concernant cet actionneur,
- une seconde liaison (16) pour piloter l'état de cet actionneur,
**en ce qu'**une liaison entre un module de contrôle et un calculateur est réalisée au moyen d'un premier bus de communication, et **en ce que** les calculateurs (L1, L2, ...Lk) travaillent de façon indépendante et asynchrone.

2. Système selon la revendication 1, dans lequel les calculateurs (L1, L2, ..., Lk) sont reliés entre eux par au moins un second bus de communication (10).

3. Système selon la revendication 1, dans lequel les premiers bus de commutation (11, 12, 13) sont des bus de type CAN.

4. Système selon la revendication 1, dans lequel au moins un actionneur est un contacteur électrique.

5. Procédé de contrôle d'un ensemble d'actionneurs (A11, ..., Anr) d'un système aéronautique pour effectuer le pilotage de celui-ci comprenant au moins deux calculateurs (L1, L2, ..., LK) travaillant de façon indépendante et a synchrone et au moins deux modules de contrôle (C1, C2, ..., Cn) de plusieurs actionneurs, chaque module de contrôle étant connecté à chaque actionneur auquel il est relié par une première et une seconde liaisons (15, 16) respectivement pour recevoir des informations concernant cet actionneur et pour piloter l'état de cet actionneur, **caractérisé en ce qu'**il comprend les étapes suivantes :
- une étape de fourniture d'informations par chaque module de contrôle concernant le(s) actionneur(s) auquel il est lié à au moins deux calculateurs,
- une étape de calcul de consignes et d'envoi de ces consignes par chaque calculateur à au moins deux modules de contrôle.

6. Système selon la revendication 1, dans lequel les actionneurs sont des contacteurs électriques d'un système de génération électrique d'un aéronef.

7. Système selon la revendication 6, dans lequel au moins un actionneur est piloté en tenant compte de l'état d'au moins un autre actionneur.

8. Système selon la revendication 1, dans lequel les actionneurs sont des vérins d'un système de pilotage des volets d'un aéronef.

9. Système selon la revendication 8, dans lequel plusieurs actionneurs sont pilotés de façon cohérente entre eux.

## Claims

1. System for controlling several actuators (A11, ..., Anr) of an aeronautical system in order to carry out control of the latter, comprising at least two computers (L1, L2, ..., Lk) and at least two modules (C1, C2, ..., Cn) for controlling at least two actuators, each control module being connected to at least two computers so as to provide the latter with information on the actuators to which it is connected, each computer, connected to at least two control modules, comprising means of calculating instructions and of sending these instructions to at least two control modules that are connected to it, **characterized in that** each control module (C1, C2, ..., Cn) is connected to each of these several actuators (A11, ..., Anr) by two connections:
- one first connection (15) for receiving information related to this actuator,
- one second connection (16) for controlling the status of this actuator,
**in that** a connection between a control module and a computer is made using one first communication bus, and **in that** the computers (L1, L2, ..., Lk) work independently and asynchronously.

2. System according to claim 1, in which the computers (L1, L2, ..., Lk) are connected to each other through at least one second communication bus (10).

3. System according to claim 1, in which the first communication buses (11, 12, 13) are buses of the CAN type.

4. System according to claim 1, in which at least one actuator is an electrical contactor.

5. Process for controlling several actuators (A11, ..., Anr) in an aeronautical system in order to carry out the control of the latter comprising at least two computers (L1, L2, ..., LK) working independently and asynchronously and at least two control modules (C1, C2, ..., Cn) for the control of several actuators, each control module being connected to each actuator to which it is connected by one first and second connections (15, 16) respectively for receiving information related to this actuator and for controlling the status of this actuator, **characterized in that** it comprises the following steps:
- a step of supplying information by each control module concerning the actuator(s) to which it is connected to at least two computers,
- a step of calculating instructions and of sending these instructions by each computer to at least two control modules.

6. System according to claim 1, in which the actuators are electrical contactors in the electrical generation system of an aircraft.

7. System according to claim 6, in which at least one actuator is controlled taking the status of at least one other actuator into account.

8. System according to claim 1, in which the actuators are jacks in a system for controlling the flaps of an aircraft.

9. System according to claim 8, in which several actuators are controlled coherently together.

## Patentansprüche

1. Steuersystem einer Einheit von Aktuatoren (A11, ..., Anr) eines Luftfahrtsystems zur Durchführung von dessen Steuerung, mit mindestens zwei Rechnern (L1, L2, ..., Lk) und mindestens zwei Steuermodulen (C1, C2, ..., Cn) von mehreren Aktuatoren, wobei jedes Steuermodul mit mindestens zwei Rechnern so verbunden ist, dass es diesen Informationen über die Aktuatoren, mit denen es verbunden ist, liefert, wobei jeder Rechner, der mit mindestens zwei Steuermodulen verbunden ist, Mittel zum Berechnen von Sollwerten und zu deren Übertragung an diese mindestens zwei Steuermodule, die mit ihm verbunden sind, aufweist,
**dadurch gekennzeichnet, dass** jedes Steuermodul (C1, C2,...Cn) mit jedem dieser mehreren Aktuatoren (A11, ... Anr) über zwei Verbindungen verbunden ist:
- eine erste Verbindung (15) zum Empfang der Informationen bezüglich dieses Aktuators,
- eine zweite Verbindung (16) zum Steuern des Zustands dieses Aktuators, und
dass eine Verbindung zwischen einem Steuermodul und einem Rechner mittels einem ersten Kommunikationsbus hergestellt ist, und dass die Rechner (L1, L2, ...Lk) auf unabhängige und asynchrone Weise arbeiten.

2. System nach Anspruch 1, wobei die Rechner (L1, L2, ..., Lk) untereinander durch mindestens einen zweiten Kommunikationsbus (10) verbunden sind.

3. System nach Anspruch 1, wobei die ersten Kommunikationsbusse (11, 12, 13) Busse vom CAN-Typ sind.

4. System nach Anspruch 1, wobei mindestens ein Aktuator ein elektrischer Kontaktgeber ist.

5. Steuerverfahren einer Einheit von Aktuatoren (A11,... Anr) eines Luftfahrtsystems, um dessen Steuerung auszuführen, mit mindestens zwei Rechnern (L1, L2, ..., LK), die auf unabhängige und asynchrone Weise arbeiten, und mindestens zwei Steuermodulen (C1, C2,...,Cn) mehrerer Aktuatoren, wobei jedes Steuermodul mit jedem Aktuator, mit dem es jeweils über eine erste und eine zweite Verbindung (15, 16) verbunden ist, um Informationen bezüglich dieses Aktuators zu empfangen und um den Zustand dieses Aktuators zu steuern, (elektrisch) verbunden ist, **dadurch gekennzeichnet, dass** es die folgenden Schritte umfaßt:
- einen Schritt des Lieferns von Informationen durch jedes Steuermodul bezüglich des/der Aktuators/Aktuatoren, mit dem/denen es verbunden ist, an mindestens zwei Rechner,
- einen Schritt des Berechnens von Sollwerten und des Sendens dieser Sollwerte für jeden Rechner an mindestens zwei Steuermodule.

6. System nach Anspruch 1, wobei die Aktuatoren elektrische Kontaktgeber eines elektrischen Stromerzeugungssystems eines Luftfahrzeugs sind.

7. System nach Anspruch 6, wobei mindestens ein Aktuator unter Berücksichtigung des Zustands mindestens eines anderen Aktuators gesteuert werden.

8. System nach Anspruch 1, wobei die Aktuatoren Zylinder eines Landeklappen-Steuersystems eines Luftfahrzeugs sind.

9. System nach Anspruch 8, wobei mehrere Aktuatoren auf untereinander kohärente Weise gesteuert werden.
